Europäisches Patentamt

European Patent Office

Office européen des brevets

(19)

(11) Veröffentlichungsnummer: **0 257 353
B1**

(12) **EUROPÄISCHE PATENTSCHRIFT**

(45) Veröffentlichungstag der Patentschrift:
14.11.90

(21) Anmeldenummer: 87111150.6

(22) Anmeldetag: 01.08.87

(51) Int. Cl.⁵: **G01N 35/06**

(54) Pipettiervorrichtung.

(30) Priorität: 14.08.86 CH 3263/86

(43) Veröffentlichungstag der Anmeldung:
02.03.88 Patentblatt 88/9

(45) Bekanntmachung des Hinweises auf die Patenterteilung:
14.11.90 Patentblatt 90/46

(84) Benannte Vertragsstaaten:
CH DE FR GB IT LI NL SE

(56) Entgegenhaltungen:
DE-A- 2 218 569
US-A- 3 491 369
US-A- 4 000 974
US-A- 4 351 799

(73) Patentinhaber: KONTRON INSTRUMENTS HOLDING
N.V., Pietermaal 6 A P.O. Box 504, Curacao(AN)

(72) Erfinder: Tompkins, David John, 417 Staines Road West,
Ashford, Middlesses(GB)

(74) Vertreter: Riccardi, Sergio, Riccardi & Co. Via
Macedonio Melloni, 32, I-20129 Milano(IT)

ACTORUM AG

## Beschreibung

Die Erfindung betrifft ein Verfahren zum Pipettieren kleiner Flüssigkeitsmengen mit einer Pipettiervorrichtung aus einer Sonde zum Eintauchen in Vorrats-, Reaktionsbehälter und dergleichen Behälter, einer mit der Sonde verbundenen Dosierpumpe und einem zwischen Sonde und Pumpe angeordneten Absperrventil. Ein derartiger Sachverhalt ist der US-A 4 000 974 entnehmen Die Erfindung betrifft ferner eine Einrichtung zum Durchführen dieses Verfahrens.

Beim Dosieren oder Pipettieren kleinster Flüssigkeitsmengen wirken sich Fehler, die dadurch entstehen, dass Teile der zu dosierenden Flüssigkeit an der Pipettensonde haften bleiben und nicht ausgestossen werden, besonders nachteilig aus. Dieser Fehler, der bei grösseren Mengen vernachlässigbar ist, wird umso gravierender, je kleiner die zu dosierenden Mengen sind. Bei modernen Analysensystemen, in denen mit Flüssigkeitsmengen in der Grössenordnung von weniger als 30 µl gearbeitet wird, werden durch winzige, an der Pipetten- bzw. Sondenspitze zurückbleibende Tropfen erhebliche Fehler verursacht.

Dieses Problem ist bekannt, und es wurden bereits vielfältige Versuche unternommen, diese Fehlerquelle bei der Pipettierung kleinster Flüssigkeitsmengen auszuschalten. Alle bisherigen Lösungsvorschläge sind aber entweder nicht ausreichend zuverlässig oder nur durch hohen apparativen Aufwand zu verwirklichen. Ausserdem bestehen bei einigen bekannten Lösungen Kontaminationsprobleme.

Der Erfindung liegt die Aufgabe zugrunde eine einfache und wirksame Lösung dieses Fehlerproblems bei der Dosierung kleinster Flüssigkeitsmengen anzugeben.

Erfindungsgemäss wird dies gelöst durch ein Verfahren der eingangs genannten Art, das sich dadurch auszeichnet, dass in der Ansaugphase der Pumpe bei offenem Ventil zunächst Luft und danach eine bestimmte Flüssigkeitsmenge angesaugt wird, während mindestens eines Teils der Ausstossphase der Pumpe das Ventil geschlossen ist und am Ende der Ausstossphase das Ventil geöffnet wird.

Eine Vorrichtung zur Durchführung dieses Verfahrens weist eine Pipettiervorrichtung mit einer Sonde zum Eintauchen in einen Flüssigkeitsbehälter, eine mit der Sonde verbundene Dosierpumpe und ein zwischen Sonde und Pumpe angeordnetes Absperrventil auf und zeichnet sich dadurch aus, dass eine Steuereinrichtung zur Steuerung des Pumpenantriebs und des Ventilantriebs vorhanden ist, die das Ventil während der Ausstossphase der Pumpe schliesst und am Ende der Ausstossphase öffnet.

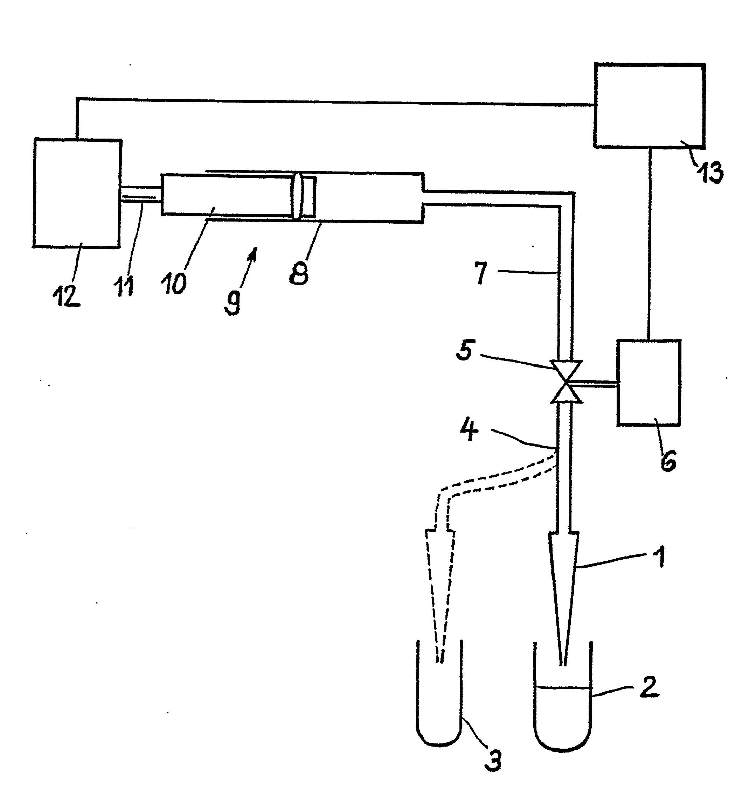

Im folgenden wird anhand der beiliegenden Zeichnung ein Ausführungsbeispiel der Erfindung beschrieben.

Die einzige Figur der Zeichnung zeigt eine schematische Darstellung einer Pipettiervorrichtung, wie sie zum Pipettieren bzw. Dosieren kleinster Flüssigkeitsmengen in Analysensystemen zum Einsatz kommt. Die Vorrichtung weist wie üblich eine Pipettenspitze oder Sonde 1 auf, die zur Entnahme und zum Ausstossen der Flüssigkeit in die entsprechenden Behälter eintaucht. Die Spitze wird von einer an sich bekannten mechanischen Vorrichtung derart betätigt, dass sie zur Entnahme einer Flüssigkeit in ein erstes Gefäss 2 und zur Abgabe der Flüssigkeit in ein zweites Gefäss 3 eintaucht, wie dies durch die gestrichelte Darstellung gezeigt ist. Da die mechanische Vorrichtung zur Bewegung der Sonde bzw. Pipettenspitze für die vorliegende Erfindung nicht von Bedeutung ist und derartige Vorrichtungen dem Fachmann in vielfacher Form bekannt sind, wird sie hier nicht gezeigt und beschrieben.

Die Sonde bzw. Pipettenspitze 1 ist über einen Schlauch 4 mit einem Absperrventil 5 verbunden. Das Ventil hat die Funktion, die Leitung zeitweise zu sperren. Im vorliegenden Beispiel handelt es sich um ein Solenoid-Ventil mit elektromagnetischem Antrieb 6. Auch andere von aussen gesteuerte Ventile sind geeignet.

Vom Ventil führt ein weiterer Schlauch 7 zum Zylinder 8 einer Pumpe 9. Die Pumpe 9 ist im vorliegenden Beispiel eine Kolbenpumpe, bei der ein Kolben 10 dicht in einem Zylinder 8 geführt wird. Der Kolben 10 ist über eine Kolbenstange 11 mit einem Motor 12 verbunden. Jede andere Pumpe, bei der ein definiertes Verhältnis zwischen Antriebsbewegung und gefördertem Volumen besteht, ist geeignet.

Wenn der Motor 12 den Kolben 10 im Zylinder 8 nach links bewegt und das Ventil 5 geöffnet ist, wird durch die Pipettenspitze 1 Luft oder Flüssigkeit angesaugt, je nach dem, ob die Spitze eintaucht oder nicht. Wenn der Motor 12 den Kolben 10 nach rechts bewegt und das Ventil geöffnet ist, wird die in der Pipettenspitze befindliche angesaugte Flüssigkeit und ein Teil der in den Leitungen 4 und 7 enthaltenen Luft ausgestossen. Wenn während dieser Ausstossphase das Ventil 5 geschlossen ist, wird die in der Leitung 7 und im Zylinder 8 befindliche Luft komprimiert.

Der Ventilantrieb 6 und der Motor 12 sind elektrisch mit einer Steuereinrichtung 13 verbunden. Die Steuereinrichtung 13 bewirkt zunächst die Richtungsumschaltung des Motors zur Erzeugung der Vor- und Rückbewegung des Kolbens 10. Gleichzeitig wird durch die Steuereinrichtung 13 durch das Signal, das die Richtungsumschaltung des Motors von der Ansaugrichtung zur Ausstossrichtung bewirkt, oder durch ein zeitlich verzögertes Signal während der Ausstossphase der Pumpe ein Signal an den Ventilantrieb 6 gegeben, durch das das Ventil 5 gesperrt wird. Während sich der Kolben 10 bei gesperrtem Ventil 5 weiterhin in Ausstossrichtung bewegt, wird die in der Leitung 5 und im Zylinder 8 befindliche Luft komprimiert. Am Ende der Ausstossphase oder kurz davor gibt die Steuereinrichtung 13 ein weiteres Signal an den Ventilantrieb 6, mit dem das Ventil geöffnet wird. Infolge des erhöhten Drucks, unter dem die in der Leitung 7 und im Zylinder 8 befindliche Luft steht, wird beim Öffnen des Ventils die in der Pipettenspitze 1 befindliche Flüssigkeit und auch die Luft mit hoher Geschwindigkeit ausgestossen. Durch die nach der Flüssigkeit ausgestossene Luft werden praktisch alle noch vorhandenen, an der Innenwand der Pipettenspitze haftenden Tröpfchen ebenfalls ausgestossen. Dadurch wird der eingangs geschilderte Messfehler so gut wie vollständig vermieden.

Ein Dosierzyklus läuft typischerweise wie folgt ab: In der Ausgangsposition ist der Kolben an seinem vorderen Umkehrpunkt. Die Pipettenspitze 1 taucht zunächst nicht ein. Der Kolben 10 wird vom Motor 12 zurückgezogen. Dadurch wird durch die Pipettenspitze 1 Luft angesaugt. Wenn ein geeignetes Luftvolumen angesaugt ist, wird die Pipettenspitze 1 in die im Behälter 2 befindliche Flüssigkeit getaucht. Durch das weitere Zurückziehen des Kolbens wird die zu dosierende Flüssigkeitsmenge in die Pipettenspitze eingesaugt.

Am hinteren Umkehrpunkt des Kolbens beginnt der Ausstossteil des Zyklus. Die Pipettenspitze wird in den Behälter 3 verbracht, in den die Flüssigkeit übertragen werden soll. Während der Ausstossphase wird der Kolben wieder zu seiner Ausgangslage vorgeschoben. Während der Ausstossphase wird an einer geeigneten Stelle das Ventil geschlossen. Dieser Punkt ist nicht kritisch. Es hat sich aber als günstig erwiesen, das Ventil zu schliessen, wenn noch etwa 20-25 µl Flüssigkeit in der Spitze sind. Auf jeden Fall sollte das Ventil so früh geschlossen werden, dass die Pumpe noch genügend Druck aufbauen kann. Am Ende der Ausstossphase wird das Ventil geöffnet und die vorher durch die Kolbenbewegung komprimierte Luft stösst den Rest der Flüssigkeit aus und nimmt an der Pipettenspitze haftende Tröpfchen mit. Auf diese Weise wird die angesaugte Flüssigkeit quantitativ in den dafür bestimmten Behälter ausgestossen.

Die erfindungsgemässe Lösung bringt eine Reihe von Vorteilen mit sich. Zunächst werden die eingangs erwähnten Fehler auf einfache Weise vermieden. Darüberhinaus ergibt sich durch das Einspritzen des restlichen Flüssigkeitsvolumens in die im Behälter bereits vorhandene Flüssigkeit ein zusätzlicher Mischungseffekt. Ein weiterer Vorteil besteht darin, dass ein langsam und damit leistungsarm laufender Kolbenantriebsmotor eingesetzt werden kann. Schliesslich ist ein weiterer wesentlicher Vorteil, dass die Pipettenspitze nicht mit der Flüssigkeit im empfangenden Behälter in Berührung kommt. Bei gewissen Untersuchungen ist beispielsweise die Probe bereits im Behälter und ein Reagens muss hinzupipettiert werden. Alle eintauchenden oder mit der Flüssigkeit im Behälter über eine Flüssigkeitsbrücke in Kontakt kommenden Pipetten können daher zur Kontamination führen, während bei der erfindungsgemässen Lösung keine Kontamination stattfinden kann.

## Patentansprüche

1. Verfahren zum Pipettieren kleiner Flüssigkeitsmengen mit einer Pipettiervorrichtung aus einer Sonde zum Eintauchen in Vorrats-, Reaktionsbehälter und dergleichen Behälter, einer mit der Sonde verbundenen Dosierpumpe und einem zwischen Sonde und Pumpe angeordneten Absperrventil, dadurch gekennzeichnet, dass in der Ansaugphase der Pumpe bei offenem Ventil zunächst Luft und danach eine bestimmte Flüssigkeitsmenge angesaugt wird, während mindestens eines Teils der Ausstossphase der Pumpe das Ventil geschlossen ist und am Ende der Ausstossphase das Ventil geöffnet wird.

2. Pipettiervorrichtung mit einer Sonde (1) zum Eintauchen in Flüssigkeitsbehälter (2, 3), einer mit der Sonde verbundenen Dosierpumpe (9) und einem zwischen Sonde und Pumpe angeordneten Absperrventil (5) mit Ventilantrieb (6), gekennzeichnet durch eine mit dem Ventilantrieb (6) verbundene Steuereinrichtung (13) die während der Ausstossphase der Pumpe (9) ein Signal zum Schliessen des Absperrventils (5) an den Ventilantrieb (6) liefert und gegen Ende der Ausstossphase der Pumpe (9) das Oeffnen des Ventils (5) bewirkt.

## Claims

1. A method of pipetting small quantities of liquid by means of a pipetting device consisting of a probe for immersion in reservoirs, test tubes and similar containers, a metering pump connected to the probe, and a shut-off valve disposed between the probe and the pump, characterised in that air, followed by a specific quantity of liquid, is sucked in in the pump intake phase with the valve open, the valve is closed during at least part of the pump ejection phase, and the valve is opened at the end of the ejection phase.

2. A pipetting device comprising a probe (1) for immersion in liquid containers (2, 3), a metering pump (9) connected to the probe, and a shut-off valve (5) disposed between the probe and the pump and having a valve drive (6), characterised by a control facility (13) which is connected to the valve drive (6) and which, during the ejection phase of the pump (9), delivers a signal to the valve drive (6) to close the shut-off valve (5) and causes the valve (5) to open towards the end of the ejection phase of the pump (9).

## Revendications

1. Procédé pour prélever, à la pipette, de petites quantités de liquides avec un dispositif de prélèvement à la pipette composé d'une sonde pour plonger dans les récipients de produit, les récipients de réaction et récipients analogues, d'une pompe de dosage reliée à la sonde et d'une vanne d'arrêt disposée entre la sonde et la pompe, caractérisé par le fait que dans la phase d'aspiration de la pompe, vanne ouverte, on aspire d'abord de l'air puis une quantité déterminée de liquide, que pendant au moins une partie de la phase d'expulsion de la pompe, la vanne est fermée, et qu'à la fin de la phase d'expulsion on ouvre la vanne.

2. Dispositif de prélèvement à la pipette comportant une fente (1) pour plonger dans des récipients de liquide (2, 3), une pompe de dosage (9) reliée à la sonde et une vanne d'arrêt (5) disposée entre la sonde et la pompe, avec un mécanisme d'entraînement (6) de la vanne, caractérisé par un appareil de commande (13) qui est relié au mécanisme d'entraînement (6) de la vanne, qui, pendant la phase d'expulsion de la pompe (9), envoie au mécanisme d'entraînement (6) de la vanne un signal pour fermer la vanne d'arrêt (5) et qui, vers la fin de la phase d'expulsion de la pompe (9), opère l'ouverture de la vanne (5).